# EUROPÄISCHE PATENTSCHRIFT

(11) **EP 4 353 573 B1**
(45) Veröffentlichungstag und Bekanntmachung des Hinweises auf die Patenterteilung: **24.12.2025**
(21) Anmeldenummer: 22200874.0
(22) Anmeldetag: 11.10.2022
(51) Int. Cl.: B62D 53/00, B62D 53/04, B62D 63/02

(54) **FAHRZEUGGESPANN AUS ZUGFAHRZEUG UND ANHÄNGER ZUM TRANSPORTIEREN VON TRANSPORTGUT**
VEHICLE COMBINATION CONSISTING OF A TRACTOR AND A TRAILER FOR TRANSPORTING GOODS TO BE TRANSPORTED
ATTELAGE DE VÉHICULE COMPRENANT UN VÉHICULE TRACTEUR ET UNE REMORQUE POUR LE TRANSPORT DE MARCHANDISES

(43) Veröffentlichungstag der Anmeldung: 17.04.2024
(73) Patentinhaber: Mojin Robotics GmbH, 70771 Leinfelden-Echterdingen (DE)
(72) Erfinder: Fröhlich, Tim, 70771 Leinfeld-Echterdingen (DE); Henning, Vitus, 64297 Darmstadt (DE)
(74) Vertreter: Szynka Smorodin Patentanwälte Partnerschaft mbB

(56) Entgegenhaltungen:
- EP-A1- 0 197 858
- WO-A1-2015/059560
- DE-A1- 1 802 335
- DE-A1- 102021 105 517

## Beschreibung

Die vorliegende Erfindung bezieht sich auf ein Fahrzeuggespann zum Transport von Transportgut. Dabei weist das Fahrzeuggespann ein Zugfahrzeug und einen Anhänger auf, welcher sich mithilfe einer Kupplung an das Zugfahrzeug ankuppeln lässt.

Vorbekannt sind Robotersysteme, die sich an Anhänger ankuppeln lassen und damit bspw. Lasten transportieren oder funktionale Aufgaben durchführen können (z. B. das Reinigen eines Bodens).

Aus der EP 0 197 858 A1 ist eine Kupplung bekannt, bei welcher ein Stift entlang einer Bogenlinie geführt ist.

Aus der EP 18 02 335 A1 ist ein Schlepper mit einem Anhänger bekannt, wobei zur Kupplung ein Drehlager vorgesehen ist.

Der vorliegenden Erfindung liegt die Aufgabe zugrunde, ein Fahrzeuggespann anzugeben, bei dem die Kupplung zwischen Anhänger und Zugfahrzeug auf eine besonders vorteilhafte Weise gestaltet ist.

Erfindungsgemäß löst diese Aufgabe ein Fahrzeuggespann nach Anspruch 1. Dessen Zugfahrzeug weist ein Kupplungsgehäuse auf, das einen Hohlraum sowie eine Anschlagfläche bildet. Diese Anschlagfläche erstreckt sich zumindest abschnittsweise entlang einer Bogenlinie, welche, bezogen auf eine vertikale Achse des Zugfahrzeugs, konkav gekrümmt ist und sich über mindestens einen halben Umlauf um die vertikale Achse des Zugfahrzeugs erstreckt. **In** einem Schnitt normal zu der Bogenlinie betrachtet begrenzt die Anschlagfläche zumindest teilweise den Hohlraum in einer horizontalen Richtung vom Zugfahrzeug weg. Damit dient die Anschlagfläche als Anschlag für ein angekuppeltes Kupplungsstück des Anhängers.

Dieses Fahrzeuggespann, insbesondere die Erstreckung der Anschlagfläche entlang der Bogenlinie um mindestens einen halben Umlauf um die vertikale Achse, kann eine ausgeprägte Relativbeweglichkeit zwischen Zugfahrzeug und angekuppeltem Anhänger ermöglichen, etwa eine Rotationsbewegung des Zugfahrzeugs relativ zum Anhänger um seine eigene Achse (der vertikalen Achse des Zugfahrzeugs). Dadurch kann es bspw. möglich sein, die Position und Ausrichtung des Anhängers zu verändern, bei gleichzeitig geringem Rangierplatzbedarf. Insbesondere kann dadurch das Fahrzeuggespann auch in engen Lagergassen (wie bspw. zwischen Hochregalen) oder auch um enge Kurven manövrieren.

Bevorzugte Ausgestaltungen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile des Fahrzeuggespanns bzw. der Kupplung in einer bestimmten Anwendung beschrieben, ist dies zugleich als Offenbarung einer entsprechenden Verwendung zu verstehen.

Das Kupplungsgehäuse ist der zugfahrzeugseitige Teil der Kupplung und lässt sich als ihr weiblicher Teil interpretieren. Es kann einen geöffneten und einen geschlossenen Zustand einnehmen. Der geöffnete Zustand ist derjenige, in dem sich das Kupplungsgehäuse befinden muss, um das Kupplungsstück in das Kupplungsgehäuse einsetzen und somit den Anhänger an das Zugfahrzeug ankuppeln zu können. Der geschlossene Zustand des Kupplungsgehäuses ist derjenige, in dem sich das Kupplungsgehäuse bei eingesetztem Kupplungsstück befinden muss, damit das Zugfahrzeug über die Kupplung Antriebskräfte an den Anhänger übertragen kann.

Die Bogenlinie erstreckt sich mindestens über einen halben Umlauf um die vertikale Achse des Zugfahrzeugs. Bevorzugt erstreckt sie sich um einen dreiviertel Umlauf, besonders bevorzugt umläuft sie die vertikale Achse des Zugfahrzeugs vollständig, bildet sie also eine geschlossene Kurve. Ihre Krümmung ist so ausgeführt, dass sich der Drehpunkt der Kupplung nicht innerhalb des Kupplungsgehäuses befindet, aber innerhalb des Zugfahrzeugs. Bevorzugt befindet sich der Drehpunkt auf der vertikalen Achse des Zugfahrzeugs.

In einem Schnitt normal zu der Bogenlinie betrachtet ist der Hohlraum bevorzugt auch zum Zugfahrzeuginneren hin (also zur vertikalen Achse) durch das Kupplungsgehäuse zumindest teilweise begrenzt, besonders bevorzugt vollständig begrenzt. Weiterhin ist er bevorzugt auch in vertikaler Richtung nach unten und/oder nach oben durch Innenflächen des Kupplungsgehäuses zumindest teilweise begrenzt, bevorzugt vollständig. Jedenfalls im geschlossenen Zustand des Kupplungsgehäuses ist der Hohlraum auch zu der vierten Seite hin, horizontal von der vertikalen Achse weg, teilweise durch die Anschlagfläche begrenzt. Dieses Querschnittsprofil liegt in einer Vielzahl Schnitte entlang der Bogenlinie vor, bevorzugt in jedem Schnitt normal zu der Bogenlinie.

Im Allgemeinen muss die Anschlagfläche entlang der Bogenlinie nicht zwingend zusammenhängend ausgebildet sein, sondern ist bspw. auch mit Unterbrechungen dazwischen eine Segmentierung möglich. Trotz etwaiger Unterbrechungen ist sie im geschlossenen Zustand bevorzugt derart vorgesehen, dass das Kupplungsstück auf jeder Drehposition eine Anlage findet (bspw. im Verhältnis zu den Unterbrechungen groß ist und diese überbrückt). Bevorzugt ist gleichwohl eine im geschlossenen Zustand unterbrechungsfrei durchgehende, insbesondere umlaufend in sich geschlossene Anschlagfläche.

Das Kupplungsgehäuse ist dabei fester Bestandteil des Zugfahrzeugs. Es verbleibt also am Zugfahrzeug, unabhängig davon, ob ein Anhänger an das Zugfahrzeug angekuppelt ist oder nicht. Das Kupplungsstück ist der männliche Teil der Kupplung und dabei fester Bestandteil des Anhängers, verbleibt also auch im abgekuppelten Zustand am Anhänger. Erst durch das Ankuppeln von Zugfahrzeug und Anhänger treten das Kupplungsgehäuse und das Kupplungsstück formschlüssig miteinander in Kontakt. Die Kupplung dient bspw. dazu, eine Funktionstrennung des Fahrzeuggespanns in das Zugfahrzeug, zur Fortbewegung des Fahrzeuggespanns, und den Anhänger, zum Transport eines Transportgutes, zu erreichen. Damit kann sich das Zugfahrzeug bspw. mit verschiedenen Anhängern kuppeln lassen und somit das jeweilige Fahrzeuggespann bspw. verschiedene Aufgaben durchführen, ebenso lassen sich leere oder beladene Anhänger temporär abstellen, bspw. aus logistischen Gründen.

Das Zugfahrzeug verfügt über eine aktive Antriebseinheit, ist also in der Lage, seine eigene Position, Ausrichtung und Geschwindigkeit bspw. mit integrierten Aktuatoren zu beeinflussen. Es kann bspw. eine Motoreinheit und eine Batterieeinheit aufweisen. Der Anhänger wird passiv bewegt, wozu über die Kupplung Antriebskräfte des Zugfahrzeugs auf den Anhänger übertragen, werden; bevorzugt weist der Anhänger keine eigene Antriebseinheit auf.

Mit vertikaler Richtung ist diejenige Richtung gemeint, welche senkrecht zur Oberfläche des Untergrunds ausgerichtet ist. Bevorzugt fällt die vertikale Richtung mit der Richtung zusammen, welche vom Erdmittelpunkt weg ausgerichtet ist. Mit horizontaler Richtung ist diejenige Richtung gemeint, welche parallel zur Oberfläche des Untergrunds ausgerichtet ist. Bevorzugt ist sie senkrecht zu der vom Erdmittelpunkt wegweisenden Richtung ausgerichtet. Die vertikale Achse ist die Achse, welche in vertikaler Richtung ausgerichtet und innerhalb des Zugfahrzeugs angeordnet ist. Vorzugsweise verläuft sie durch das Zentrum des Zugfahrzeugs. Besonders bevorzugt stellt sie eine Symmetrieachse der Bogenlinie und/oder eine Rotationsachse des Zugfahrzeugs dar.

Gemäß einer bevorzugten Ausführungsform ist die Bogenlinie, entlang welcher sich die Anschlagfläche erstreckt, um die vertikale Achse umlaufend geschlossen. Im Allgemeinen kann sie bspw. in Form einer Ellipse oder anderen geschlossenen Kurve geformt sein, bevorzugt formt sie jedoch einen Kreis. Dadurch kann sich das Zugfahrzeug relativ zum angekuppelten Anhänger vollständig um seine vertikale Achse drehen. Dies kann bspw. dahingehend von Vorteil sein, dass sich das Zugfahrzeug nach dem Ankuppeln zunächst in eine gewünschte Fahrrichtung drehen kann, bevor eine Horizontalbewegung des Anhängers eingeleitet wird.

Bevorzugt ist die Anschlagfläche zumindest im geschlossenen Zustand des Kupplungsgehäuses drehsymmetrisch zu der vertikalen Achse des Zugfahrzeugs ausgebildet, insbesondere rotationssymmetrisch. Die Anschlagfläche ist also gewissermaßen als Innenmantelfläche eines Hohlzylinders geformt, dessen Zylinderachse mit der vertikalen Achse zusammenfällt. Die Rotationssymmetrie muss dabei nicht mit einer streng mathematischen Exaktheit bestehen. Für die Funktion kann es bspw. ausreichend sein, wenn sich die Anschlagfläche in jedem horizontalen Schnitt durch die Anschlagfläche zwischen zwei in dieser Schnittebene liegenden konzentrischen Kreisen in einem Abstand von 2 cm, 1,5 cm, 1 cm oder 0,5 cm befindet. Die Symmetrie ermöglicht in vorteilhafter Weise eine Rotation des Zugfahrzeugs, während die Position des angehängten Anhängers unverändert verbleibt. Das Zugfahrzeug kann den Anhänger gewissermaßen "auf der Stelle drehen".

Erfindungsgemäß ist beim geöffneten Zustand des Kupplungsgehäuses ein Teil des Kupplungsgehäuses relativ zum übrigen Kupplungsgehäuse vertikal versetzt. Prinzipiell ist dabei eine Überlagerung mit einem Horizontalversatz denkbar, bevorzugt ist jedoch ein ausschließlich vertikales Versetzen. Eine in vertikaler Richtung öffnende Kupplung lässt sich bspw. platzsparend zwischen Zugfahrzeug und Anhänger implementieren. Außerdem kann das Kupplungsstück bei einem vertikal geöffneten Kupplungsgehäuse besonders einfach und reibungsfrei in das Kupplungsgehäuse eingeführt werden. Prinzipiell kann der Versatz auch nach oben hin erfolgen, bevorzugt ist jedoch ein Versatz nach unten.

Bei einer bevorzugten Ausgestaltung ist im geöffneten Zustand ein Teil des Kupplungsgehäuses relativ zum übrigen Kupplungsgehäuse so weit vertikal nach unten versetzt, dass ein in dem vertikal versetzten Teil des Kupplungsgehäuses ausgebildeter Abschnitt einer Kontaktfläche unterhalb einer Lauffläche des nicht angekuppelten Kupplungsstücks angeordnet ist. Die Kontaktfläche ist hierbei eine Innenfläche des Kupplungsgehäuses, welche dem Hohlraum zugewandt ist und diesen zumindest im geschlossenen Zustand nach unten begrenzt. Sie kann ein Auflager für das eingekuppelte Kupplungsstück sein. Bevorzugt ist sie in Form einer Ringfläche gestaltet. Die Lauffläche des Kupplungsstücks ist diejenige Außenfläche des Kupplungsstücks, mit welcher ein angekuppeltes Kupplungsstück aufliegt.

Im geschlossenen Zustand des Kupplungsgehäuses ist der Teil des Kupplungsgehäuses, welcher im geöffneten Zustand nach unten versetzt ist, nach oben auf eine gemeinsame Höhe mit dem Rest des Kupplungsgehäuses versetzt, ist also eine zusammenhängende Kontaktfläche gebildet. Auf diese Weise ist das angekuppelte Kupplungsstück ebenfalls angehoben, also nach oben versetzt. Dadurch können einerseits vorteilhaft auch Anhänger mit Kupplungsstücken angekuppelt werden, welche sich auf leicht unterschiedlicher vertikaler Höhe befinden, bspw. aufgrund eines leicht unebenen Untergrundes. Andererseits kann durch die Vertikalbewegung des Kupplungsstückes beim Ankuppeln eine eventuell vorhandene Wegfahrsperre des Anhängers gelöst werden, ohne dass dafür zusätzliche Aktuatoren oder Handgriffe von Arbeitern notwendig sind.

Bei einer bevorzugten Ausführungsform ist die Kontaktfläche überhöht gestaltet. In einem Schnitt normal zu der Bogenlinie betrachtet, ist die Kontaktfläche also zum Kurveninneren der Bogenlinie hin quergeneigt. Bildlich gesprochen ist die Kontaktfläche eine zu ihrem Zentrum hin abfallende Ringfläche. Dadurch kann eine Auflagekraft des Kupplungsstücks, welche zwischen der Lauffläche und der Kontaktfläche übertragen wird, vektoriell in eine vertikale und eine horizontale Komponente aufgeteilt werden. Die horizontale Komponente kann die Anschlagfläche bei der Fixierung des Kupplungsstücks unterstützen. Zusätzlich kann das Kupplungsstück durch die Querneigung die Tendenz zeigen, eine Sollposition innerhalb des Kupplungsgehäuses einzunehmen. Damit können z. B. ein nachteiliges Spiel und ein Anstoßen des Kupplungsstücks an die Anschlagfläche reduziert werden.

Bei einer bevorzugten Ausführungsform weist das Kupplungsgehäuse eine Führungsfläche auf, welche eine weitere Innenfläche des Kupplungsgehäuses darstellt und zumindest einen Bereich des Hohlraums vertikal nach unten begrenzt. In einem Schnitt normal zur Bogenlinie befindet sie sich an einer der Anschlagfläche horizontal gegenüberliegenden Seite des Hohlraums. Bevorzugt ist die Führungsfläche von der vertikalen Achse weg nach unten quergeneigt, stellt sie also bspw. das Gegenstück zu der Kontaktfläche dar. Die Führungsfläche kann analog der Kontaktfläche zu einer Sollpositionseinnahme des Kupplungsstücks beitragen, weshalb auf die Beschreibung oben verwiesen wird.

Bei einer bevorzugten Ausführungsform weist das Kupplungsstück ein Rad auf. Eine im Wesentlichen zylindrische Mantelfläche des Rades, über die das Rad beim Rollen bspw. auf einem Untergrund abrollt, bildet die Lauffläche. Im angekuppelten Zustand ist das Rad über die Lauffläche in Kontakt mit der Kontaktfläche. Ein Kupplungsstück mit Rad ist besonders gut für eine möglichst kraftfreie Relativbewegung zwischen Kupplungsstück und Kupplungsgehäuse geeignet. Dadurch kann sich das Zugfahrzeug selbst mit angekuppeltem Anhänger möglichst kraftfrei relativ zum Anhänger drehen. Der Begriff "Rad" soll hier auch eine Rolle oder Walze mitumfassen. Anstelle eines Rades könnte im Allgemeinen jedoch auch eine Kugel oder ein gleitendes Auflager eingesetzt werden.

Bei einer bevorzugten Ausführungsform weist das Fahrzeuggespann ein weiteres Kupplungsstück mit einem weiteren Rad auf, welches im angekuppelten Zustand ebenfalls innerhalb des Kupplungsgehäuses angeordnet ist und auf der Kontaktfläche aufliegt. Der Anhänger könnte auch mit drei oder mehr Kupplungsstücken ausgestattet sein, bevorzugt weist er jedoch genau zwei Kupplungsstücke auf. Dadurch kann über die Kupplungsstücke auch ein Moment übertragen werden, sodass bspw. einem Verkippen bzw. Umfallen des Anhängers vorgebeugt werden kann.

Bevorzugt schneiden sich hierbei die Rotationsachsen der Räder der Kupplungsstücke in einem Punkt mit der Rotationsachse der Anschlagfläche. In anderen Worten bilden die Kupplungsstücke des Anhängers einen Momentanpol, welcher mit dem Momentanpol des Zugfahrzeugs zusammenfällt. Hierdurch wird bspw. die Möglichkeit geschaffen, dass das Zugfahrzeug auch bei einer Mehrzahl Kupplungsstücke um die eigene Achse rotieren kann, ohne dass sich der Anhänger dabei wesentlich vorwärts oder rückwärts bewegt. Dies erhöht die Manövrierbarkeit bei gleichzeitig stabiler und sicherer Auflage des Anhängers am Zugfahrzeug.

Bei einer bevorzugten Ausführungsform weist das Zugfahrzeug eine Radanordnung und/oder -ansteuerung auf, welche so gestaltet ist, dass das Zugfahrzeug ohne Horizontalversatz rotieren kann, bevorzugt um die vertikale Achse. Dadurch ist das Zugfahrzeug besonders manövrierbar gestaltet und kann sich bei minimalem Rangierbedarf an eine gewünschte Position begeben.

Bevorzugt ist das Zugfahrzeug im Wesentlichen rotationssymmetrisch gestaltet. Denkbar ist bspw. eine im Wesentlichen zylinderförmige Außenkontur. Dadurch kann das Zugfahrzeug platzsparend gestaltet sein und ist bspw. die Gefahr einer Kollision mit auf dem Anhänger befindlichem Transportgut oder anderen Hindernissen reduziert.

Bei einer bevorzugten Ausführungsform weist der Anhänger zumindest einen Standfuß auf, der bei abgekuppeltem Anhänger ein reibschlüssiges Abstellen des Anhängers ermöglichen kann. Der Anhänger könnte dabei mit nur genau einem oder einer Vielzahl an Standfüßen ausgestattet sein, bevorzugt sind jedoch zwei. Damit ist ein abgekuppelter Anhänger bspw. gegen ein ungewolltes Wegrollen gesichert.

Bei einer bevorzugten Ausgestaltung ist das Zugfahrzeug als autonomer Roboter gestaltet. Das bedeutet, dass seine Fahrbewegungen und/oder das Ankuppeln an den Anhänger autonom erfolgen können. Das Zugfahrzeug ist also in der Lage, sich bspw. selbstständig zu orientieren, sich zu einem abgestellten Anhänger zu bewegen, diesen anzukuppeln, sich mit dem angekuppelten Anhänger selbstständig zu bewegen, den Anhänger an einem gewünschten Ort selbstständig wieder abzustellen und sich vom Anhänger zu entfernen.

Auf diese Weise kann das Fahrzeuggespann nicht nur mit geringem Personalaufwand betrieben werden, sondern es können auch mehrere Fahrzeuggespanne gleichzeitig im Einsatz sein, was eine flexible Lagerlogistik ermöglichen kann. Zudem kann ein Fahrzeuggespann mit einem autonomen Roboter deutlich kleinere Abmessungen aufweisen als ein Fahrzeuggespann mit einem bemannten Zugfahrzeug. Ein damit betriebenes Lager kann also gezielt auf die Maße zugeschnitten sein, welche für das Transportgut benötigt werden.

Bei einer bevorzugten Ausgestaltung ist das Zugfahrzeug mit einem Roboterarm ausgestattet, der dazu ausgelegt ist, Transportgut auf den Anhänger zu laden und/oder diesen zu entladen. Ein solcher Roboterarm kann bspw. mittig auf der Oberseite des Zugfahrzeugs angebracht sein. An dem der Befestigung am Zugfahrzeug distalen Ende des Roboterarms kann zur Bewegung des Transportguts bspw. ein mechanischer Greifer, ein Magnet oder eine Palettengabel befestigt sein. In vorteilhafter Weise kann dadurch derselbe Roboter sowohl das Verladen des Transportgutes als auch dessen Transport übernehmen. Alternativ oder zusätzlich kann ein Arbeiter den Anhänger beladen, bspw. während das Zugfahrzeug einen Fahrprozess z. B. mit einem weiteren angekuppelten Anhänger ausführt.

Bevorzugt wird das Fahrzeuggespann dazu verwendet, dass der Anhänger an das Zugfahrzeug angekuppelt wird. Das Verfahren des Ankuppelns erfolgt dabei bevorzugt wie folgt: Zunächst wird ein Teil des Kupplungsgehäuses relativ zum Rest des Kupplungsgehäuses vertikal nach unten versetzt, und zwar so weit, dass die Kontaktfläche des versetzten Teils des Kupplungsgehäuses unterhalb der Lauffläche des Kupplungsstücks angeordnet ist. Dann wird das Kupplungsstück innerhalb des Kupplungsgehäuses angeordnet. Dies kann durch eine Horizontalbewegung des Zugfahrzeugs zum Anhänger hin erfolgen oder durch ein manuelles Einsetzen des Kupplungsstücks in das Kupplungsgehäuse, bspw. durch einen Arbeiter. Schließlich kann der versetzte Teil des Kupplungsgehäuses zurück nach oben versetzt, also das Kupplungsgehäuse vom geöffneten in den geschlossenen Zustand überführt werden. Dabei wird das Kupplungsstück des Anhängers angehoben. Auch der Standfuß des Anhängers wird dabei vom Boden angehoben und damit die reibschlüssige Verbindung des Anhängers mit dem Boden gelöst. Das Fahrzeuggespann ist nun fahrbereit.

Im Folgenden wird die Erfindung anhand von Ausführungsbeispielen näher erläutert, wobei die einzelnen Merkmale auch in anderen Kombinationen erfindungswesentlich sein können und sich implizit auf alle Kategorien der Erfindung beziehen.

Im Einzelnen zeigt:
- Figur 1: eine perspektivische Ansicht eines erfindungsgemäßen Fahrzeuggespanns mit einem Zugfahrzeug mitsamt einem Kupplungsgehäuse im geöffneten Zustand sowie einem abgekuppelten Anhänger,
- Figur 2: das Fahrzeuggespann gemäß Figur 1 im angekuppelten Zustand,
- Figur 3: eine geschnittene Detailansicht eines Kupplungsgehäuses sowie ein Kupplungsstück mitsamt einem Rad,
- Figur 4: in einer Darstellung analog zu Figur 3 eine weitere Ausführungsform,
- Figur 5: in einer Darstellung analog zu Figur 3 eine weitere Ausführungsform,
- Figur 6: in einer Darstellung analog zu Figur 3 eine weitere Ausführungsform,
- Figur 7: eine perspektivische Darstellung eines Zugfahrzeugs mit einem Greifarm.

### Bevorzugte Ausführung der Erfindung

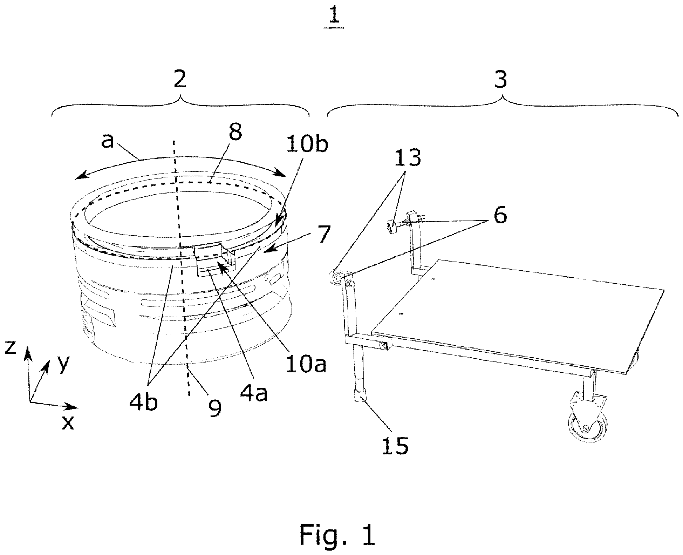

**Figur 1** zeigt ein erfindungsgemäßes Fahrzeuggespann 1 mit einem Zugfahrzeug 2 und einem Anhänger 3. Das Zugfahrzeug 2 ist im Wesentlichen rotationssymmetrisch gestaltet. Es handelt sich um einen mobilen autonomen Roboter, der um seine vertikale Achse 9 rotieren (Drehbewegung a) sowie sich in der horizontalen Ebene x, y bewegen kann. Das Zugfahrzeug 2 weist ein Kupplungsgehäuse 4a, 4b auf, welches sich in Figur 1 in einem geöffneten Zustand befindet. Ein Teil 4a des Kupplungsgehäuses ist dazu relativ zum übrigen Kupplungsgehäuse 4b vertikal nach unten versetzt. Das Kupplungsgehäuse weist insgesamt zwei solche vertikal versetzbare Teile 4a auf, wovon eines in Figur 1 auf der Rückseite des Zugfahrzeugs 2 angeordnet und somit verdeckt ist.

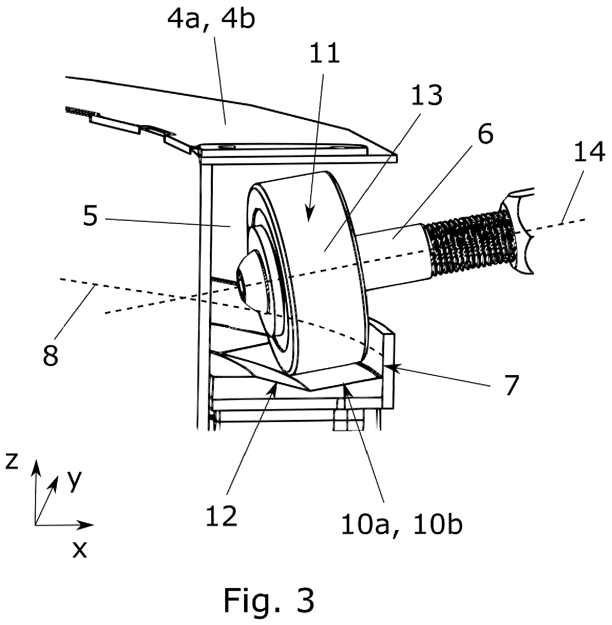

Das Kupplungsgehäuse 4a, 4b bildet eine Anschlagfläche 7 (anschaulicher zu sehen in den Figuren 3-6), welche sich entlang einer Bogenlinie 8 erstreckt. Die Bogenlinie 8 ist dabei eine geschlossene, rotationssymmetrische Kurve, die die vertikale Achse 9 vollständig umläuft (dargestellt als gestrichelter Kreis). Auf der rechten Seite in Figur 1 ist ein Anhänger 3 dargestellt, welcher zwei Kupplungsstücke 6 mit jeweils einem Rad 13 aufweist. Zusätzlich weist der Anhänger 3 zwei Standfüße 15 auf (von denen nur einer zu sehen ist). Die Standfüße 15 verhindern ein ungewolltes Wegrollen des Anhängers 3.

Das Kupplungsgehäuse 4a, 4b bildet eine Kontaktfläche 10a, 10b, welche einen Hohlraum 5 des Kupplungsgehäuses 4a, 4b nach unten begrenzt. Im geöffneten Zustand, bei dem also Teile 4a des Kupplungsgehäuses vertikal nach unten versetzt sind, sind auch die entsprechenden Teile der Kontaktfläche 10a relativ zur übrigen Kontaktfläche 10b nach unten versetzt und befinden sie sich damit auf einer vertikalen Position unterhalb der Räder 13 der Kupplungsstücke 6. Das Zugfahrzeug 2 ist damit bereit zum Ankuppeln, es kann die Kupplungsstücke 6 in die vertikal versetzten Teile 4a des Kupplungsgehäuses 4a, 4b aufnehmen und sie dann anheben.

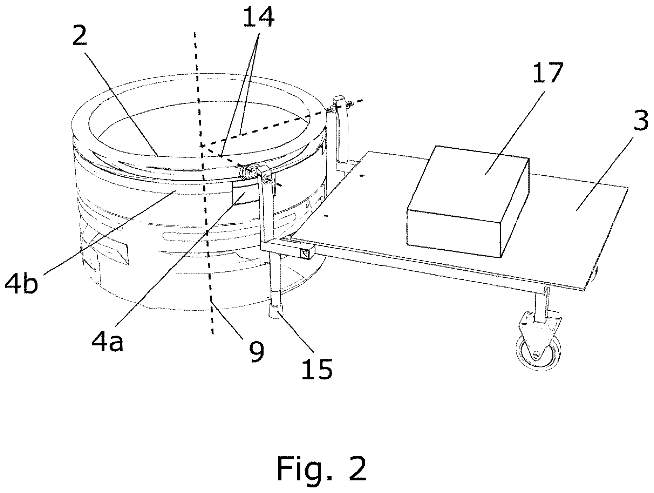

In **Figur 2** befindet sich das Kupplungsgehäuse 4a, 4b im geschlossenen Zustand und ist der Anhänger 3 angekuppelt. Da sich der Anhänger 3 im angekuppelten Zustand befindet, sind seine Standfüße 15 angehoben und ist der Anhänger 3 fahrbereit, kann also das hier beispielhaft dargestellte Lastgut 17 transportiert werden. Dargestellt sind ebenfalls Rotationsachsen 14 der Räder 13 der Kupplungsstücke 6. Sie schneiden sich in einem Punkt mit der vertikalen Achse 9, welche eine Rotationsachse des Zugfahrzeugs 2 darstellt. Dies ermöglicht eine Rotation des Zugfahrzeugs 2 um seine vertikale Achse 9 ohne den angekuppelten Anhänger 3 zu bewegen.

**Figur 3** zeigt eine geschnittene Detailansicht des Kupplungsgehäuses 4a, 4b und sein Zusammenwirken mit dem Kupplungsstück 6. Das Kupplungsgehäuse 4a, 4b bildet den Hohlraum 5, in den das einseitig gelagerte Rad 13 des Kupplungsstücks 6 eingesetzt werden kann. Der Hohlraum 5 wird in horizontaler Richtung x, y durch die Anschlagfläche 7 begrenzt, welche sich entlang der Bogenlinie 8 erstreckt. Nach unten wird der Hohlraum 5 durch die Kontaktfläche 10a, 10b begrenzt, welche ein Auflager für das Rad 13 bildet, also für dessen Lauffläche 11. Die Kontaktfläche 10a, 10b ist überhöht geformt, d. h. zum Zentrum der Bogenlinie hin (in dieser Darstellung in die negative x-Richtung) quergeneigt. Als Gegenstück zu der Kontaktfläche 10a, 10b ist die Führungsfläche 12 nach außen quergeneigt (in die positive x-Richtung). Das Rad 13 rotiert um die Rotationsachse 14 und kann sich innerhalb des geschlossenen Kupplungsgehäuses 4a, 4b bewegen, indem es auf der Kontaktfläche 10a, 10b abrollt.

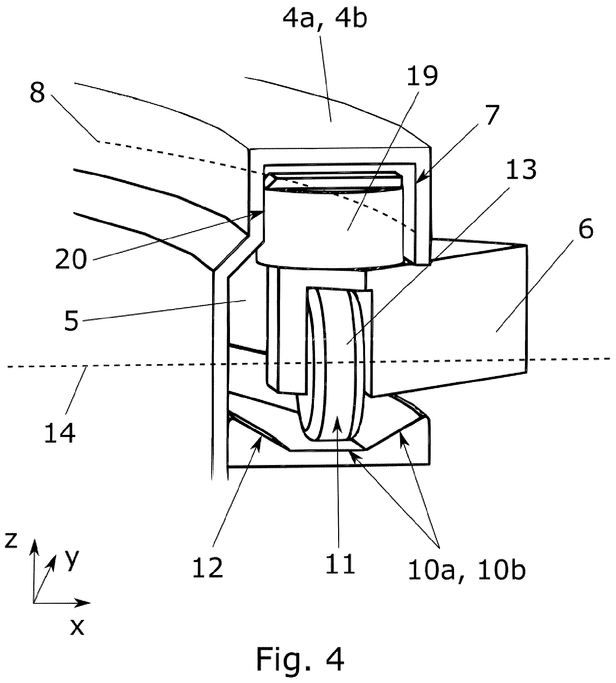

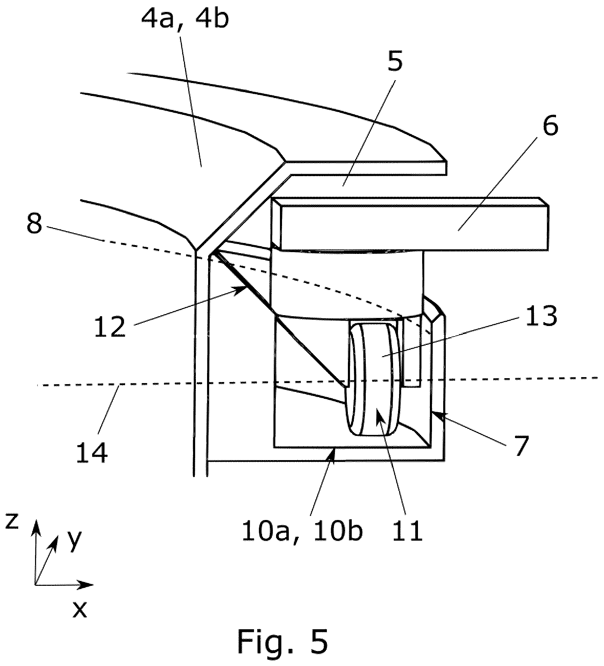

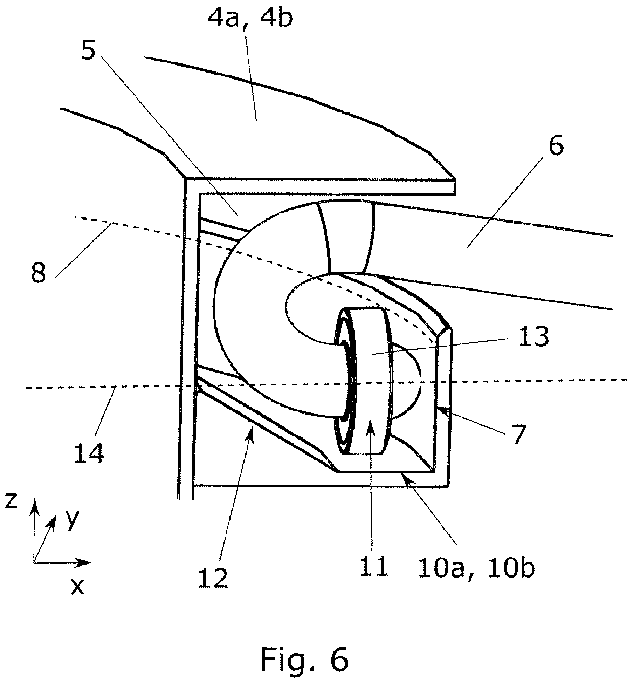

**Figur 4** zeigt eine weitere Ausführungsform des Kupplungsgehäuses 4a, 4b und des Kupplungsstücks 6 in derselben Darstellungsart. Hierbei werden funktional äquivalente Elemente mit denselben Bezugszeichen wie in Figur 3 bezeichnet (dasselbe gilt für die Figuren 5 und 6). Generell bezieht sich die vorstehende Beschreibung auch die folgenden Ausführungsformen und werden vorwiegend die Unterschiede beschrieben.

In dieser Ausführungsform ist das Rad 13 beidseitig gelagert und kann es um die horizontal ausgerichtete Rotationsachse 14 rotieren. Die Kontaktfläche 10a, 10b teilt sich in einen inneren, horizontalen Abschnitt und einen äußeren, zum Zentrum der Bogenlinie hin (hier in die negative x-Richtung) quergeneigten Abschnitt auf.

Die Anschlagfläche 7 ist im oberen Bereich des Kupplungsgehäuses 4a, 4b angeordnet und kann (im Gegensatz zu der in Figur 3 dargestellten Ausführungsform) nicht mit dem Rad 13 in Kontakt treten, sondern mit einem oberen Teil 19 des Kupplungsstücks 6. Auf der der Anschlagfläche 7 horizontal gegenüberliegenden Seite kann dieses Teil 19 des Kupplungsstücks 6 mit einer Innenfläche 20 des Kupplungsgehäuses 4a, 4b in Kontakt treten. Das Kupplungsstück 6 ist also in der Horizontalen innen- und außenseitig formschlüssig durch das Kupplungsgehäuse 4a, 4b eingefasst.

Der geneigte Abschnitt der Kontaktfläche 10a, 10b sowie die Führungsfläche 12 dienen bei dieser Ausführungsform primär der Einführung des Kupplungsstücks 6 in den oberen Bereich des Kupplungsgehäuses 4a, 4b während des Ankuppelns.

**Figur 5** zeigt eine weitere Ausführungsform, bei der die Kontaktfläche 10a, 10b nicht quergeneigt, sondern horizontal ausgerichtet ist. Der horizontale Formschluss des angekuppelten Kupplungsstücks 6 erfolgt über die geneigte Führungsfläche 12 sowie die im unteren Bereich des Kupplungsgehäuses 4a, 4b angeordnete Anschlagfläche 7. Zur leichteren Einführung des Kupplungsstücks 6 während des Ankuppelvorgangs weist das Kupplungsstück 6 in seinem unteren Bereich eine Formschräge auf, welche in Kontakt mit der Führungsfläche 12 treten kann. Das Rad 13 ist beidseitig gelagert und weist eine horizontale Rotationsachse 14 auf.

**Figur 6** zeigt eine weitere Ausführungsform, bei der das Kupplungsstück 6 bogenförmig gestaltet ist, das Rad 13 also am Ende eines bogenförmigen Stabes angebracht ist. An seinem Ende weist das Kupplungsstück 6 eine Rundung auf, welche in Kontakt mit der Anschlagfläche 7 treten kann und als Anschlag dient. Das Rad 13 liegt mit seiner Lauffläche 11 auf der horizontal ausgerichteten Kontaktfläche 10a, 10b auf. Die gebogene Form des Kupplungsstücks 6 kann während des Ankuppelvorgangs mit der nach außen hin quergeneigten Führungsfläche 12 in Kontakt treten.

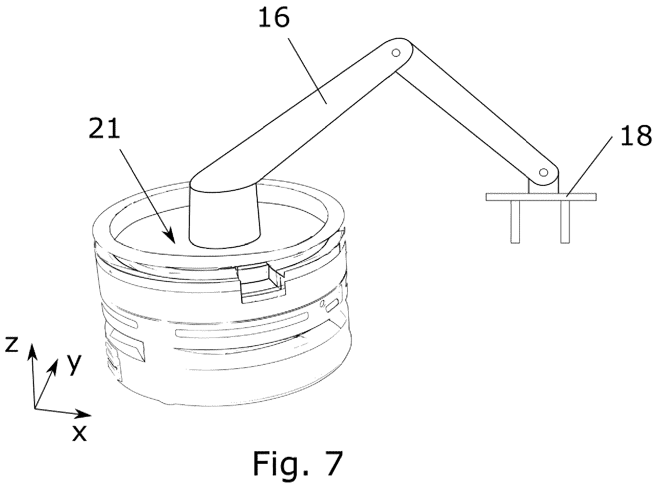

**Figur 7** zeigt eine weitere Ausführungsform eines Zugfahrzeugs 2 mit einem beispielhaften Greifarm 16, der mittig auf der Oberseite 21 des Zugfahrzeugs 2 angebracht ist. Er weist an seinem der Befestigung am Zugfahrzeug 2 distalen Ende einen mechanischen Greifer 18 auf, mit dem das Transportgut 17 bewegt und auf den Anhänger 3 verladen werden kann.

## Patentansprüche

1. Fahrzeuggespann (1), welches ein Zugfahrzeug (2) und einen Anhänger (3) aufweist,
wobei das Zugfahrzeug (2) ein Kupplungsgehäuse (4a, 4b), das einen Hohlraum (5) bildet,
und der Anhänger (3) ein Kupplungsstück (6) aufweist,
wobei das Kupplungsgehäuse (4a, 4b) einen geöffneten und einen geschlossenen Zustand einnehmen kann, und wobei das Kupplungsgehäuse (4a, 4b) eine Anschlagfläche (7) bildet,
welche Anschlagfläche (7) sich zumindest abschnittsweise entlang einer Bogenlinie (8) erstreckt, und in einem Schnitt normal zu der Bogenlinie (8) den Hohlraum (5) in einer horizontalen Richtung (x, y) vom Zugfahrzeug (2) weg begrenzt,
und welche Bogenlinie (8) bezogen auf eine vertikale Achse (9) des Zugfahrzeugs (2) konkav gekrümmt ist und sich über mindestens einen halben Umlauf um die vertikale Achse (9) des Zugfahrzeugs (2) erstreckt,
und in welchem Hohlraum (5) das Kupplungsstück (6) angeordnet werden kann oder angeordnet ist,
**dadurch gekennzeichnet, dass** in dem geöffneten Zustand des Kupplungsgehäuses (4a, 4b) ein Teil (4a) des Kupplungsgehäuses (4a, 4b) relativ zum übrigen Kupplungsgehäuse (4b) vertikal versetzt ist.

2. Fahrzeuggespann (1) nach Anspruch 1, bei welchem die Bogenlinie (8), entlang welcher sich die Anschlagfläche (7) erstreckt, um die vertikale Achse (9) umlaufend in sich geschlossen ist.

3. Fahrzeuggespann (1) nach einem der vorstehenden Ansprüche, bei welchem zumindest in dem geschlossenen Zustand des Kupplungsgehäuses (4a, 4b) die Anschlagfläche (7) zumindest drehsymmetrisch zu der vertikalen Achse (9) des Zugfahrzeugs (2) ist.

4. Fahrzeuggespann (1) nach einem der vorstehenden Ansprüche, bei welchem in dem geöffneten Zustand der Teil (4a) des Kupplungsgehäuses (4a, 4b) relativ zum übrigen Kupplungsgehäuse (4b) nach unten versetzt ist, sodass ein in dem Teil (4a) ausgebildeter Abschnitt (10a) einer Kontaktfläche (10a, 10b), welche den Hohlraum (5) im geschlossenen Zustand nach unten hin begrenzt, unterhalb einer Lauffläche (11) des nicht angekuppelten Kupplungsstücks (6) angeordnet ist, wobei die Lauffläche (11) des angekuppelten Kupplungsstücks (6) innerhalb des geschlossenen Kupplungsgehäuses (4a, 4b) auf der Kontaktfläche (10a, 10b) aufliegt, also das Kupplungsstück (6) angehoben ist.

5. Fahrzeuggespann (1) nach einem der vorstehenden Ansprüche, bei welchem das Kupplungsgehäuse (4a, 4b) eine Kontaktfläche (10a, 10b) bildet, welche den Hohlraum (5) nach unten hin begrenzt und in einem angekuppelten Zustand, also wenn das Kupplungsstück (6) innerhalb des Hohlraums (5) angeordnet ist und sich das Kupplungsgehäuse (4a, 4b) im geschlossenen Zustand befindet, ein Auflager für das Kupplungsstück (6) darstellt, wobei die Kontaktfläche (10a, 10b) überhöht gestaltet ist, in dem Schnitt normal zu der Bogenlinie (8) also zum Kurveninneren der Bogenlinie (8) hin quergeneigt ist.

6. Fahrzeuggespann (1) nach einem der vorstehenden Ansprüche, bei welchem das Kupplungsgehäuse (4a, 4b) eine Führungsfläche (12) aufweist, die in dem Schnitt betrachtet auf einer der Anschlagfläche (7) horizontal entgegengesetzten Seite des Hohlraums (5) angeordnet ist und von der vertikalen Achse (9) weg schräg abfällt.

7. Fahrzeuggespann (1) nach einem der vorstehenden Ansprüche, bei welchem das Kupplungsstück (6) ein Rad (13) aufweist, welches in einem angekuppelten Zustand, also wenn das Kupplungsstück (6) innerhalb des Hohlraums (5) angeordnet ist und sich das Kupplungsgehäuse (4a, 4b) im geschlossenen Zustand befindet, innerhalb des Kupplungsgehäuses (4a, 4b) angeordnet ist und auf einer Kontaktfläche (10a, 10b) des Kupplungsgehäuses (4a, 4b) aufliegt, welche den Hohlraum (5) nach unten hin begrenzt.

8. Fahrzeuggespann (1) nach Anspruch 3 und 7, welches ein weiteres Kupplungsstück (6) mit einem weiteren Rad (13) aufweist, welches im angekuppelten Zustand innerhalb des Kupplungsgehäuses (4a, 4b) angeordnet ist und auf der Kontaktfläche (10a, 10b) aufliegt, wobei die Räder der Kupplungsstücke Rotationsachsen (14) aufweisen, welche sich in einem Punkt mit der Rotationsachse der Anschlagfläche (7) schneiden.

9. Fahrzeuggespann (1) nach einem der vorstehenden Ansprüche, bei welchem das Zugfahrzeug (2) eine Radanordnung oder -ansteuerung aufweist, welche so gestaltet ist, dass das Zugfahrzeug (2) ohne Horizontalversatz um die vertikale Achse (9) rotieren kann.

10. Fahrzeuggespann (1) nach einem der vorstehenden Ansprüche, bei welchem das Zugfahrzeug (2) im Wesentlichen rotationssymmetrisch gestaltet ist.

11. Fahrzeuggespann (1) nach einem der vorstehenden Ansprüche, bei welchem der Anhänger (3) einen Standfuß (15) aufweist, welcher dazu ausgelegt ist, im geöffneten Zustand des Kupplungsgehäuses (4a, 4b) reibschlüssig abgestellt zu werden.

12. Fahrzeuggespann (1) nach einem der vorstehenden Ansprüche, bei welchem das Zugfahrzeug (2) als autonomer Roboter gestaltet ist, wobei sowohl seine Fahrbewegungen als auch das Ankuppeln des Zugfahrzeugs (2) an den Anhänger (3) autonom erfolgen.

13. Fahrzeuggespann (1) nach einem der vorstehenden Ansprüche, bei welchem das Zugfahrzeug (2) mit einem Greifarm (16) ausgestattet ist, der dazu ausgelegt ist, ein Transportgut (17) auf den Anhänger (3) zu laden und / oder diesen zu entladen.

14. Verwendung eines Fahrzeuggespanns (1) nach einem der vorstehenden Ansprüche, bei welcher der Anhänger (3) angekuppelt wird, indem das Kupplungsstück (6) innerhalb des Kupplungsgehäuses (4a, 4b) angeordnet wird und das Kupplungsgehäuse (4a, 4b) in den geschlossenen Zustand überführt wird.

## Claims

1. A vehicle combination (1) comprising a towing vehicle (2) and a trailer (3),
wherein the towing vehicle (2) comprises a coupling housing (4a, 4b) forming a cavity (5),
and the trailer (3) comprises a coupling member (6),
wherein the coupling housing (4a, 4b) can assume an open and a closed state, and wherein the coupling housing (4a, 4b) forms a stop surface (7),
which stop surface (7) extends at least in sections along an arc line (8) and, in a section normal to the arc line (8), delimits the cavity (5) in a horizontal direction (x, y) away from the towing vehicle (2),
and which arc line (8) is concavely curved with respect to a vertical axis (9) of the towing vehicle (2) and extends over at least half a circulation around the vertical axis (9) of the towing vehicle (2),
and in which cavity (5) the coupling member (6) can be or is arranged,
**characterized in that**, in the open state of the coupling housing (4a, 4b), a part (4a) of the coupling housing (4a, 4b) is offset vertically relative to the remaining coupling housing (4b).

2. Vehicle combination (1) according to claim 1, in which the arc line (8), along which the stop surface (7) extends, is closed in itself circumferentially around the vertical axis (9).

3. Vehicle combination (1) according to one of the preceding claims, in which, at least in the closed state of the coupling housing (4a, 4b), the stop surface (7) is at least rotationally symmetrical with respect to the vertical axis (9) of the towing vehicle (2).

4. Vehicle combination (1) according to one of the preceding claims, in which, in the open state, the part (4a) of the coupling housing (4a, 4b) is offset downwards relative to the remaining coupling housing (4b), such that a section (10a), which is formed in the part (4a), of a contact surface (10a, 10b) which delimits the cavity (5) downwards in the closed state is arranged below a tread surface (11) of the non-coupled coupling member (6), wherein the tread surface (11) of the coupled coupling member (6) lies on the contact surface (10a, 10b)within the closed coupling housing (4a, 4b), that is to say the coupling member (6) is raised.

5. Vehicle combination (1) according to one of the preceding claims, in which the coupling housing (4a, 4b) forms a contact surface (10a, 10b) which delimits the cavity (5) downwards and, in a coupled state, that is to say when the coupling member (6) is arranged within the cavity (5) and the coupling housing (4a, 4b) is in the closed state, constitutes a support for the coupling member (6), wherein the contact surface (10a, 10b) is of raised design, that is to say is inclined transversely in the section normal to the arc line (8) towards the curve interior of the arc line (8).

6. Vehicle combination (1) according to one of the preceding claims, in which the coupling housing (4a, 4b) has a guide surface (12) which, as viewed in the section, is arranged on a side of the cavity (5) which is horizontally opposite the stop surface (7) and slopes away obliquely from the vertical axis (9).

7. Vehicle combination (1) according to one of the preceding claims, in which the coupling member (6) has a wheel (13) which, in a coupled state, that is to say when the coupling member (6) is arranged within the cavity (5) and the coupling housing (4a, 4b) is in the closed state, is arranged within the coupling housing (4a, 4b) and lies on a contact surface (10a, 10b) of the coupling housing (4a, 4b) which delimits the cavity (5) downwards.

8. Vehicle combination (1) according to claims 3 and 7, which has a further coupling member (6) with a further wheel (13) which, in the coupled state, is arranged within the coupling housing (4a, 4b) and lies on the contact surface (10a, 10b), wherein the wheels of the coupling members have axes of rotation (14) which intersect at one point with the axis of rotation of the stop surface (7).

9. Vehicle combination (1) according to one of the preceding claims, in which the towing vehicle (2) has a wheel arrangement or wheel control which is designed such that the towing vehicle (2) can rotate about the vertical axis (9) without horizontal offset.

10. Vehicle combination (1) according to one of the preceding claims, in which the towing vehicle (2) is designed to be substantially fully rotationally symmetrical.

11. Vehicle combination (1) according to one of the preceding claims, in which the trailer (3) has a stand (15) which is designed to be placed in a frictionally engaged manner in the open state of the coupling housing (4a, 4b).

12. Vehicle combination (1) according to one of the preceding claims, in which the towing vehicle (2) is designed as an autonomous robot, wherein both its driving movements and the coupling of the towing vehicle (2) to the trailer (3) take place autonomously.

13. Vehicle combination (1) according to one of the preceding claims, in which the towing vehicle (2) is equipped with a gripper arm (16) which is designed to load cargo (17) onto the trailer (3) and/or to unload said cargo.

14. Use of a vehicle combination (1) according to one of the preceding claims, in which the trailer (3) is coupled by the coupling member (6) being arranged within the coupling housing (4a, 4b) and the coupling housing (4a, 4b) being transferred into the closed state.

## Revendications

1. Ensemble de véhicules (1) comprenant un véhicule tracteur (2) et une remorque (3),
dans lequel le véhicule tracteur (2) comprend un boîtier d'attelage (4a, 4b) formant une cavité (5),
et la remorque (3) comprend une pièce d'attelage (6),
dans lequel le boîtier d'attelage (4a, 4b) peut prendre un état ouvert et un état fermé, et dans lequel le boîtier d'attelage (4a, 4b) forme une surface d'arrêt (7),
laquelle surface d'arrêt (7) s'étend au moins en partie le long d'une ligne courbe (8) et, dans une coupe normale à la ligne courbe (8), délimite la cavité (5) dans une direction horizontale (x, y) à l'écart du véhicule tracteur (2),
et laquelle ligne courbe (8) est courbée de manière concave par rapport à un axe vertical (9) du véhicule tracteur (2) et s'étend sur au moins une demi-circonférence autour de l'axe vertical (9) du véhicule tracteur (2),
et dans laquelle cavité (5) la pièce d'attelage (6) peut être disposée ou est disposée,
**caractérisé en ce que**, dans l'état ouvert du boîtier d'attelage (4a, 4b), une partie (4a) du boîtier d'attelage (4a, 4b) est décalée verticalement par rapport au reste du boîtier d'attelage (4b).

2. Ensemble de véhicules (1) selon la revendication 1, dans lequel la ligne courbe (8) le long de laquelle s'étend la surface d'arrêt (7) est fermée sur elle-même de manière circonférentielle autour de l'axe vertical (9).

3. Ensemble de véhicules (1) selon l'une quelconque des revendications précédentes, dans lequel, au moins dans l'état fermé du boîtier d'attelage (4a, 4b), la surface d'arrêt (7) présente au moins une symétrie de révolution par rapport à l'axe vertical (9) du véhicule tracteur (2).

4. Ensemble de véhicules (1) selon l'une quelconque des revendications précédentes, dans lequel, dans l'état ouvert, la partie (4a) du boîtier d'attelage (4a, 4b) est décalée vers le bas par rapport au reste du boîtier d'attelage (4b), de sorte qu'une portion (10a), réalisée dans la partie (4a), d'une surface de contact (10a, 10b) qui délimite vers le bas la cavité (5) dans l'état fermé, est disposée au-dessous d'une surface de roulement (11) de la pièce d'attelage (6) non accouplée, dans lequel la surface de roulement (11) de la pièce d'attelage (6) accouplée repose à l'intérieur du boîtier d'attelage (4a, 4b) fermé sur la surface de contact (10a, 10b), c'est-à-dire que la pièce d'attelage (6) est soulevée.

5. Ensemble de véhicules (1) selon l'une quelconque des revendications précédentes, dans lequel le boîtier d'attelage (4a, 4b) forme une surface de contact (10a, 10b) qui délimite vers le bas la cavité (5) et, dans un état accouplé, c'est-à-dire lorsque la pièce d'attelage (6) est disposée à l'intérieur de la cavité (5) et que le boîtier d'attelage (4a, 4b) se trouve dans l'état fermé, constitue un appui pour la pièce d'attelage (6), dans lequel la surface de contact (10a, 10b) est réalisée de manière surélevée, c'est-à-dire que, dans la coupe normale à la ligne courbe (8), elle est inclinée transversalement vers l'intérieur de la courbe de la ligne courbe (8).

6. Ensemble de véhicules (1) selon l'une quelconque des revendications précédentes, dans lequel le boîtier d'attelage (4a, 4b) comprend une surface de guidage (12) qui, vue dans la coupe, est disposée sur un côté de la cavité (5) opposé horizontalement à la surface d'arrêt (7) et descend en oblique à l'écart de l'axe vertical (9).

7. Ensemble de véhicules (1) selon l'une quelconque des revendications précédentes, dans lequel la pièce d'attelage (6) comprend une roue (13) qui, dans un état accouplé, c'est-à-dire lorsque la pièce d'attelage (6) est disposée à l'intérieur de la cavité (5) et que le boîtier d'attelage (4a, 4b) se trouve dans l'état fermé, est disposée à l'intérieur du boîtier d'attelage (4a, 4b) et repose sur une surface de contact (10a, 10b) du boîtier d'attelage (4a, 4b) qui délimite vers le bas la cavité (5).

8. Ensemble de véhicules (1) selon les revendications 3 et 7, comprenant une autre pièce d'attelage (6) avec une autre roue (13) qui, dans l'état accouplé, est disposée à l'intérieur du boîtier d'attelage (4a, 4b) et repose sur la surface de contact (10a, 10b), dans lequel les roues des pièces d'attelage comprennent des axes de rotation (14) qui se coupent en un point avec l'axe de rotation de la surface d'arrêt (7).

9. Ensemble de véhicules (1) selon l'une quelconque des revendications précédentes, dans lequel le véhicule tracteur (2) comprend un agencement ou entraînement de roue qui est conçu de telle sorte que le véhicule tracteur (2) puisse tourner autour de l'axe vertical (9) sans décalage horizontal.

10. Ensemble de véhicules (1) selon l'une quelconque des revendications précédentes, dans lequel le véhicule tracteur (2) est conçu sensiblement avec une symétrie de révolution.

11. Ensemble de véhicules (1) selon l'une quelconque des revendications précédentes, dans lequel la remorque (3) comprend un pied d'appui (15) qui est conçu pour être posé par friction dans l'état ouvert du boîtier d'attelage (4a, 4b).

12. Ensemble de véhicules (1) selon l'une quelconque des revendications précédentes, dans lequel le véhicule tracteur (2) est conçu sous la forme d'un robot autonome, dans lequel aussi bien ses mouvements de déplacement que l'attelage du véhicule tracteur (2) à la remorque (3) s'effectuent de manière autonome.

13. Ensemble de véhicules (1) selon l'une quelconque des revendications précédentes, dans lequel le véhicule tracteur (2) est équipé d'un bras de préhension (16) qui est conçu pour charger un article à transporter (17) sur la remorque (3) et/ou pour décharger celle-ci.

14. Utilisation d'un ensemble de véhicules (1) selon l'une quelconque des revendications précédentes, dans laquelle la remorque (3) est accouplée en disposant la pièce d'attelage (6) à l'intérieur du boîtier d'attelage (4a, 4b) et en transférant le boîtier d'attelage (4a, 4b) dans l'état fermé.
